# EUROPEAN PATENT APPLICATION

(11) **EP 4 494 473 A1**
(43) Date of publication of application: **22.01.2025**
(21) Application number: 23770312.9
(22) Date of filing: 22.02.2023
(51) Int. Cl.: A23D 7/00, A23D 9/00, A21D 2/16

(54) **LIQUID FAT OR OIL FOR WATER-IN-OIL EMULSIONS**

(30) Priority: 16.03.2022 JP 2022040965
(71) Applicant: Fuji Oil Holdings Inc., Izumisano-shi, Osaka 598-8540 (JP)
(72) Inventor: TAKANO, Kan, Izumisano-shi, Osaka 598-8540 (JP)
(74) Representative: Becker, Eberhard
(86) International application number: PCT/JP2023/006545
(87) International publication number: WO 2023/176353

(57) **Abstract**

The present invention addresses the problem of providing a water-in-oil emulsion which has a water separation suppression effect and a desired hardness even if the aqueous phase ratio is high and emulsifying agents other than lecithin and water-soluble dietary fibers are not substantially contained therein. The problem is solved by using a liquid fat or oil for water-in-oil emulsions, the liquid fat or oil having a specific constituent fatty acid composition, a diglyceride content and a triglyceride content within certain ranges, so as to provide a water-in-oil emulsion with a water separation suppression effect and a desired hardness.

## Description

### Technical Field

The present invention relates to a liquid oil and/or fat for a water-in-oil emulsion.

### Background Art

In a water-in-oil emulsion, an oil phase is generally composed of a plurality of oils and/or fats for the purpose of adjusting the required physical properties. When these oils and/or fats are roughly classified for convenience into high-melting-point oils and/or fats, middle-melting-point oils and/or fats, and low-melting-point oils and/or fats according to the melting point of the oils and/or fats, the high-melting-point oils and/or fats serve to impart heat-resistant shape retention and hardness, the middle-melting-point oils and/or fats serve to secure the balance between plasticity and hardness, and the low-melting-point oils and/or fats serve to impart flexibility and smoothness to the structure. An oil and/or fat having any of the melting points is selected in consideration of the physical properties and flavor required for the water-in-oil emulsion.

The water-in-oil emulsion is required to have a certain degree of hardness in order to ensure ease of molding and shape retention. Meanwhile, in order to ensure workability such as spreadability on bread and kneading into a dough, plasticity and flexibility are also required, and excessive hardness is not preferable in this application. Therefore, there is a range in which the hardness of the water-in-oil emulsion falls within an appropriate range for the purpose of using the water-in-oil emulsion in a wide range of applications.

The water-in-oil emulsion is often required to contain a certain amount of solid fats in order to satisfy the requirements of hardness and heat resistance. In this case, due to the presence of the solid fats, there are issues that the food has a strong oily feeling and lacks freshness when eaten, and that the food contains a large amount of fatty acids to be avoided such as saturated fatty acids and trans fatty acids. In order to avoid these issues, it is conceivable to reduce the proportion of the oil phase contained in the water-in-oil emulsion and increase the proportion of the aqueous phase. However, in this case, there is an issue that the emulsion stability is lowered, so that syneresis occurs to impair the safety of distribution as a food product.

As a solution to the issues caused by increasing the proportion of the aqueous phase in the water-in-oil emulsion, there have been widely proposed techniques such as a technique of blending water-soluble dietary fiber in a large amount to reduce the oil content (Patent Document 1 and Patent Document 2), and a technique of blending an emulsifier other than lecithin in a large amount to increase the rate of water (Patent Document 2).

### Citation List

### Patent Document

Patent Document 1: JP 2014-195427 A
Patent Document 2: JP 2016-158572 A

### SUMMARY OF INVENTION

### Technical Problems

The known techniques of Patent Document 1 and Patent Document 2 require the use of water-soluble dietary fiber and an emulsifier other than lecithin in order to improve emulsifiability. Therefore, the techniques have issues that flavor adjustment for masking flavors derived from such ingredients is required, and that the techniques are not suitable for recent demand of consumers who avoid labeling of excessive food additives. Moreover, the techniques also have issues that the water-in-oil emulsion is insufficient in the required syneresis inhibiting effect or does not have the required physical properties (hardness) due to the reduced oil content.

Accordingly, there has been a demand for providing a water-in-oil emulsion having both the syneresis inhibiting effect and the required hardness without substantially using a component such as water-soluble dietary fiber and an emulsifier other than lecithin even when the water-in-oil emulsion has a high proportion of an aqueous phase.

### Solution to Problems

As a result of intensive studies to solve the above-mentioned issues, the present inventor has surprisingly found the following. That is, use of a liquid oil and/or fat for a water-in-oil emulsion having a specific constituent fatty acid composition and having a diglyceride content and a triglyceride content each within a certain range can provide a water-in-oil emulsion having a syneresis inhibiting effect and a required hardness even though it has a high proportion of an aqueous phase and is substantially free of water-soluble dietary fiber and an emulsifier other than lecithin, and can solve the above-mentioned issues, and thus has completed the present invention.

That is, the present invention includes the following inventions.
(1) A liquid oil and/or fat for a water-in-oil emulsion satisfying all of (A) to (D):
   (A) a total content of palmitic acid and stearic acid is from 10 to 45 wt.% in a constituent fatty acid composition;
   (B) a total content of oleic acid and linoleic acid is from 55 to 80 wt.% in a constituent fatty acid composition;
   (C) a content of a diglyceride is 8 wt.% or more; and
   (D) a content of an SU2 triglyceride is from 30 to 70 wt.%,
   wherein S represents a saturated fatty acid having from 16 to 22 carbons, U represents an unsaturated fatty acid having 18 carbons, and the SU2 triglyceride represents a triglyceride in which one molecule of S and two molecules of U are bonded together.
(2) A water-in-oil emulsion substantially free of water-soluble dietary fiber and an emulsifier other than lecithin, the water-in-oil emulsion containing at least the liquid oil and/or fat for a water-in-oil emulsion according to (1) and having a proportion of an aqueous phase of from 25 to 70 wt.%.
(3) A water-in-oil emulsion substantially free of water-soluble dietary fiber and an emulsifier other than lecithin, the water-in-oil emulsion containing at least the liquid oil and/or fat for a water-in-oil emulsion according to (2) and having a proportion of an aqueous phase of from 30 to 60 wt.%.
(4) A water-in-oil emulsion substantially free of water-soluble dietary fiber and an emulsifier other than lecithin, the water-in-oil emulsion containing at least the liquid oil and/or fat for a water-in-oil emulsion according to (3) and having a proportion of an aqueous phase of from 35 to 55 wt.%.
(5) The water-in-oil emulsion according to (2), wherein the water-in-oil emulsion contains 5 to 50 wt.% of the liquid oil and/or fat for a water-in-oil emulsion, and an oil phase satisfies all of (a) to (c):
   (a) after complete dissolution, a solid fat content that is generated by holding the oil phase at 0°C for 5 minutes is from 15 to 40%;
   (b) after complete dissolution, a solid fat content that is generated by holding the oil phase at 5°C for 7 days is from 25 to 55%; and
   (c) a (b)/(a) ratio is from 0.9 to 1.4.
(6) The water-in-oil emulsion according to (3), wherein the water-in-oil emulsion contains 5 to 50 wt.% of the liquid oil and/or fat for a water-in-oil emulsion, and an oil phase satisfies all of (a) to (c):
   (a) after complete dissolution, a solid fat content that is generated by holding the oil phase at 0°C for 5 minutes is from 15 to 40%;
   (b) after complete dissolution, a solid fat content that is generated by holding the oil phase at 5°C for 7 days is from 25 to 55%; and
   (c) a (b)/(a) ratio is from 0.9 to 1.4.
(7) The water-in-oil emulsion according to (4), wherein the water-in-oil emulsion contains 5 to 50 wt.% of the liquid oil and/or fat for a water-in-oil emulsion, and an oil phase satisfies all of (a) to (c):
   (a) after complete dissolution, a solid fat content that is generated by holding the oil phase at 0°C for 5 minutes is from 15 to 40%;
   (b) after complete dissolution, a solid fat content that is generated by holding the oil phase at 5°C for 7 days is from 25 to 55%; and
   (c) a (b)/(a) ratio is from 0.9 to 1.4.
(8) The water-in-oil emulsion according to (5), containing 70 wt.% or less of an oil and/or fat containing, in a constituent fatty acid composition, 20 wt.% or more of a fatty acid having 14 or less carbons.
(9) The water-in-oil emulsion according to (6), containing 65 wt.% or less of an oil and/or fat containing, in a constituent fatty acid composition, 20 wt.% or more of a fatty acid having 14 or less carbons.
(10) The water-in-oil emulsion according to (7), containing 60 wt.% or less of an oil and/or fat containing, in a constituent fatty acid composition, 20 wt.% or more of a fatty acid having 14 or less carbons.
(11) The water-in-oil emulsion according to (5), containing 8 wt.% or less of an oil and/or fat containing, in a constituent fatty acid composition, 90 wt.% or more of a saturated fatty acid having 16 or more carbons.
(12) The water-in-oil emulsion according to (6), containing 8 wt.% or less of an oil and/or fat containing, in a constituent fatty acid composition, 90 wt.% or more of a saturated fatty acid having 16 or more carbons.
(13) The water-in-oil emulsion according to (7), containing 8 wt.% or less of an oil and/or fat containing, in a constituent fatty acid composition, 90 wt.% or more of a saturated fatty acid having 16 or more carbons.
(14) The water-in-oil emulsion according to (8), containing 8 wt.% or less of an oil and/or fat containing, in a constituent fatty acid composition, 90 wt.% or more of a saturated fatty acid having 16 or more carbons.
(15) The water-in-oil emulsion according to (9), containing 8 wt.% or less of an oil and/or fat containing, in a constituent fatty acid composition, 90 wt.% or more of a saturated fatty acid having 16 or more carbons.
(16) The water-in-oil emulsion according to (10), containing 8 wt.% or less of an oil and/or fat containing, in a constituent fatty acid composition, 90 wt.% or more of a saturated fatty acid having 16 or more carbons.
(17) The liquid oil and/or fat for a water-in-oil emulsion according to (1), which is shea olein.
(18) The liquid oil and/or fat for a water-in-oil emulsion according to (1), which is a low melting point fraction obtained by fractionation of an interesterified oil that is obtained by random interesterification.
(19) A method for inhibiting syneresis of a water-in-oil emulsion by using a liquid oil and/or fat satisfying all of (A) to (D):
   (A) a total content of palmitic acid and stearic acid is from 10 to 45 wt.% in a constituent fatty acid composition;
   (B) a total content of oleic acid and linoleic acid is from 55 to 80 wt.% in a constituent fatty acid composition;
   (C) a content of a diglyceride is 8 wt.% or more; and
   (D) a content of an SU2 triglyceride is from 30 to 70 wt.%,
   wherein S represents a saturated fatty acid having from 16 to 22 carbons, U represents an unsaturated fatty acid having 18 carbons, and the SU2 triglyceride represents a triglyceride in which one molecule of S and two molecules of U are bonded together.
(20) The method according to (19), wherein the water-in-oil emulsion has a proportion of an aqueous phase of from 25 to 70 wt.%.
(21) The method according to (19), wherein the water-in-oil emulsion has a proportion of an aqueous phase of from 30 to 60 wt.%.
(22) The method according to (19), wherein the water-in-oil emulsion has a proportion of an aqueous phase of from 35 to 55 wt.%.

In other words, the present invention includes the following inventions.
(1) A liquid oil and/or fat for a water-in-oil emulsion satisfying all of (A) to (D), the liquid oil and/or fat being used in a water-in-oil emulsion having a proportion of an aqueous phase of from 25 to 70 wt.% and substantially free of water-soluble dietary fiber and an emulsifier other than lecithin:
   (A) a total content of palmitic acid and stearic acid is from 10 to 45 wt.% in a constituent fatty acid composition;
   (B) a total content of oleic acid and linoleic acid is from 55 to 80 wt.% in a constituent fatty acid composition;
   (C) a content of a diglyceride is 8 wt.% or more; and
   (D) a content of an SU2 triglyceride is from 30 to 70 wt.%,
   wherein S represents a saturated fatty acid having from 16 to 22 carbons, U represents an unsaturated fatty acid having 18 carbons, and the SU2 triglyceride represents a triglyceride in which one molecule of S and two molecules of U are bonded together.
(2) A water-in-oil emulsion containing from 5 to 50 wt.% of the liquid oil and/or fat for a water-in-oil emulsion according to (1), the water-in-oil emulsion having a proportion of an aqueous phase of from 25 to 70 wt.% and substantially free of water-soluble dietary fiber and an emulsifier other than lecithin, wherein an oil phase satisfies all of (a) to (c):
   (a) after complete dissolution, a solid fat content that is generated by holding the oil phase at 0°C for 5 minutes is from 15 to 40%;
   (b) after complete dissolution, a solid fat content that is generated by holding the oil phase at 5°C for 7 days is from 25 to 55%; and
   (c) a (b)/(a) ratio is from 0.9 to 1.4.
(3) The water-in-oil emulsion according to (2), containing 70 wt.% or less of an oil and/or fat containing, in a constituent fatty acid composition, 20 wt.% or more of a fatty acid having 14 or less carbons.
(4) The water-in-oil emulsion according to (2) or (3), containing 8 wt.% or less of an oil and/or fat containing, in a constituent fatty acid composition, 90 wt.% or more of a saturated fatty acid having 16 or more carbons.
(5) The liquid oil and/or fat for a water-in-oil emulsion according to (1), which is shea olein.
(6) The liquid oil and/or fat for a water-in-oil emulsion according to (1), which is a low melting point fraction obtained by fractionation of an interesterified oil that is obtained by random interesterification.
(7) A method for inhibiting syneresis of a water-in-oil emulsion by using the liquid oil and/or fat for a water-in-oil emulsion according to (1).

### Effects of Invention

According to the present invention, it is possible to provide a water-in-oil emulsion having a high proportion of an aqueous phase and having both the syneresis inhibiting effect and the required hardness by blending an appropriate liquid oil and/or fat without substantially using water-soluble dietary fiber and an emulsifier other than lecithin.

### DESCRIPTION OF EMBODIMENT

Hereinafter, the present invention is described in detail.

Examples of the oil and/or fat that can be used in the oil phase contained in the liquid oil and/or fat for a water-in-oil emulsion and the water-in-oil emulsion of the present invention include vegetable oils and/or fats such as high erucic rapeseed oil, rapeseed oil (canola oil), soybean oil, sunflower seed oil, cottonseed oil, peanut oil, rice bran oil, corn oil, safflower oil, olive oil, kapok oil, sesame oil, evening primrose oil, palm oil, palm kernel oil, coconut oil, medium-chain fatty acid triglycerides (MCTs), shea butter, and sal fat, and animal oils and/or fats such as milk fat, beef tallow, lard, fish oil, and whale oil. In the present invention, one or more oils and/or fats selected from these oils and/or fats can be used after being subjected to one or more processes selected from fractionation, hydrogenation, and interesterification.

The liquid oil and/or fat for a water-in-oil emulsion of the present invention preferably has a solid fat content at 25°C of 7% or less. More preferably, the solid fat content at 25°C is 3% or less.

In the liquid oil and/or fat for a water-in-oil emulsion of the present invention, the total content of palmitic acid and stearic acid needs to be from 10 to 45 wt.%, and is preferably from 15 to 43 wt.%, and more preferably from 20 to 40 wt.% in the constituent fatty acid composition. If the total content of palmitic acid and stearic acid exceeds 45 wt.%, the oil phase becomes too hard and rigid, so that the water-in-oil emulsion may tend to cause syneresis. On the other hand, if the total content of palmitic acid and stearic acid is less than 10 wt.%, the hardness may be insufficient.

In the liquid oil and/or fat for a water-in-oil emulsion of the present invention, the total content of oleic acid and linoleic acid needs to be from 55 to 80 wt.%, and is preferably from 57 to 78 wt.%, and more preferably from 59 to 75 wt.% in the constituent fatty acid composition. If the total content of oleic acid and linoleic acid exceeds 80 wt.%, the amount of the liquid oil component is too large, so that the water-in-oil emulsion may be incapable of retaining the shape. On the other hand, if the total content of oleic acid and linoleic acid is less than 55 wt.%, the oil phase becomes too hard and rigid, so that the water-in-oil emulsion may tend to cause syneresis.

In the liquid oil and/or fat for a water-in-oil emulsion of the present invention, the total content of saturated fatty acids is preferably from 15 to 50 wt.%, more preferably from 18 to 45 wt.%, and still more preferably from 20 to 40 wt.% in the constituent fatty acid composition. If the total content of saturated fatty acids exceeds 50 wt.%, the oil phase becomes too hard and rigid, so that the water-in-oil emulsion may tend to cause syneresis. On the other hand, if total content of saturated fatty acids is less than 15 wt.%, the hardness may be insufficient.

In the liquid oil and/or fat for a water-in-oil emulsion of the present invention, the total content of trans fatty acids is preferably 2 wt.% or less, more preferably 1.5 wt.% or less, and still more preferably 1 wt.% or less in the constituent fatty acid composition.

In the liquid oil and/or fat for a water-in-oil emulsion of the present invention, the content of a diglyceride needs to be 8 wt.% or more, and is preferably from 8 to 25 wt.%, more preferably from 9 to 22 wt.%, and still more preferably from 9.5 to 20 wt.%. If the content of the diglyceride is less than 8 wt.%, sufficient emulsifiability is not obtained, and the water-in-oil emulsion may cause syneresis.

In the liquid oil and/or fat for a water-in-oil emulsion of the present invention, the content of an SU2 triglyceride needs to be from 30 to 70 wt.%, and is preferably from 30 to 65 wt.%, and more preferably from 30 to 60 wt.%. If the content of the SU2 triglyceride exceeds 70 wt.%, plasticity may be deteriorated. On the other hand, if it is less than 30 wt.%, the hardness may be insufficient.

Note that S represents a saturated fatty acid having from 16 to 22 carbons, U represents an unsaturated fatty acid having 18 carbons, and the SU2 triglyceride represents a triglyceride in which one molecule of S and two molecules of U are bonded together.

In the liquid oil and/or fat for a water-in-oil emulsion of the present invention, the content of a PO2 triglyceride is preferably from 2 to 30 wt.%, more preferably from 2.5 to 28 wt.%, and still more preferably from 3 to 26 wt.%. If the content of the PO2 triglyceride exceeds 30 wt.%, plasticity may be deteriorated. On the other hand, if the content of the PO2 triglyceride is less than 2 wt.%, the hardness may be insufficient.

In the liquid oil and/or fat for a water-in-oil emulsion of the present invention, the content of an StO2 triglyceride is preferably less than 50 wt.%, more preferably from 2 to 48 wt.%, still more preferably from 3 to 45 wt.%, and most preferably from 4 to 42 wt.%. If the content of the StO2 triglyceride exceeds 50 wt.%, plasticity may be deteriorated.

In the liquid oil and/or fat for a water-in-oil emulsion of the present invention, the content of a BO2 triglyceride is preferably less than 10 wt.%, more preferably less than 5 wt.%, still more preferably less than 2 wt.%, and most preferably less than 0.5 wt.%. If the content of the BO2 triglyceride exceeds 10 wt.%, plasticity may be deteriorated.

In the liquid oil and/or fat for a water-in-oil emulsion of the present invention, the total content of an S2U triglyceride and an SSS triglyceride is preferably from 5 to 35 wt.%, more preferably from 7 to 30 wt.%, and still more preferably from 10 to 25 wt.%. If the content of the S2U triglyceride and the SSS triglyceride exceeds 35 wt.%, the oil phase becomes too hard and rigid, so that the water-in-oil emulsion may tend to cause syneresis. On the other hand, if it is less than 5 wt.%, the hardness may be insufficient.

Note that S represents a saturated fatty acid having from 16 to 22 carbons, U represents an unsaturated fatty acid having 18 carbons, the S2U triglyceride represents a triglyceride in which two molecules of S and one molecule of U are bonded together, and the SSS triglyceride represents a triglyceride in which three molecules of S are bonded together.

The liquid oil and/or fat for a water-in-oil emulsion of the present invention is preferably a liquid fraction (shea olein) obtained by fractionation of shea butter, or a low melting point fraction obtained by fractionation of an interesterified oil that is obtained by random interesterification. The liquid oil and/or fat for a water-in-oil emulsion of the present invention is more preferably a liquid fraction (shea olein) obtained by fractionation of shea butter, or a low melting point fraction obtained by fractionation of an interesterified oil that is obtained by mixing only an oil and/or fat raw material having a lauric acid content of 2 wt.% or less and subjecting the raw material to random interesterification.

The oil phase contained in the water-in-oil emulsion of the present invention can be prepared by adding and dissolving/dispersing oil-soluble components such as a pigment, an antioxidant, and/or a perfume as needed in addition to the liquid oil and/or fat for a water-in-oil emulsion described above and the oil and/or fat described below.

The water-in-oil emulsion of the present invention is substantially free of water-soluble dietary fiber.

In the present invention, the term "water-soluble dietary fiber" refers to, among indigestible carbohydrates that are contained in foods and hardly undergo digestion and absorption in human digestive organs, water-soluble carbohydrates. Specific examples thereof include indigestible polysaccharides such as inulin, indigestible dextrin, polydextrose, agar-agar, sodium alginate, gum arabic, beet fiber, xanthan gum, guar gum, partially hydrolyzed guar gum, indigestible starch, and pullulan, and indigestible oligosaccharides such as fructooligosaccharides, galactooligosaccharides, xylooligosaccharides, and gentiooligosaccharides.

In order for the water-in-oil emulsion to be "substantially free of water-soluble dietary fiber", the content of the water-soluble dietary fiber in the water-in-oil emulsion needs to be 0.05 wt.% or less, and is preferably 0.01 wt.% or less, and more preferably 0.001 wt.% or less. Most preferably, the water-in-oil emulsion contains no water-soluble dietary fiber.

The water-in-oil emulsion of the present invention is substantially free of an emulsifier other than lecithin.

In the present invention, examples of the emulsifier other than lecithin include glycerol fatty acid esters, polyglycerol fatty acid esters, sucrose fatty acid esters, propylene glycol fatty acid esters, sorbitan fatty acid esters, organic acid monoglycerides, and polysorbate.

In order for the water-in-oil emulsion to be "substantially free of an emulsifier other than lecithin", the content of the emulsifier other than lecithin in the water-in-oil emulsion needs to be 0.01 wt.% or less, and is preferably 0.005 wt.% or less, and more preferably 0.001 wt.% or less. Most preferably, the water-in-oil emulsion contains no emulsifier other than lecithin.

As long as the water-in-oil emulsion of the present invention satisfies the condition that it is substantially free of water-soluble dietary fiber and an emulsifier other than lecithin, the water-in-oil emulsion can be prepared by adding, to water or warm water, a water-soluble milk component, flavor materials such as an aqueous solution and/or powder containing components derived from soybean, almond, cocoa, or oat, and if necessary, commonly used raw materials such as salt, powdered milk, water-insoluble dietary fiber, sugars, thickeners, inorganic salts, preservatives, shelf life improvers, flavoring agents, perfumes, and/or pigments, and dissolving/dispersing the materials.

The proportion of the aqueous phase in the water-in-oil emulsion of the present invention is preferably from 25 to 70 wt.%, more preferably from 30 to 60 wt.%, and still more preferably from 35 to 55 wt.% with respect to the entire water-in-oil emulsion. If the proportion of the aqueous phase in the entire water-in-oil emulsion exceeds 70 wt.%, the water-in-oil emulsion is unstably emulsified, so that the water-in-oil emulsion may tend to cause syneresis. On the other hand, a proportion of the aqueous phase of less than 25 wt.% is contrary to the object of the present invention.

The method for producing the water-in-oil emulsion of the present invention is not particularly limited, but the water-in-oil emulsion can be produced by pre-emulsifying an oil phase and an aqueous phase by a routine method and then rapidly cooling and kneading them with a perfecter, a Votator, a Kombinator or the like.

The proportion of the liquid oil and/or fat for a water-in-oil emulsion in the water-in-oil emulsion of the present invention is preferably from 5 to 50 wt.%, more preferably from 7 to 45 wt.%, and most preferably from 9 to 40 wt.%. If the proportion of the liquid oil and/or fat for a water-in-oil emulsion in the water-in-oil emulsion exceeds 50 wt.%, the required hardness may not be obtained. On the other hand, if the proportion of the liquid oil and/or fat for a water-in-oil emulsion is less than 5 wt.%, the oil phase becomes too hard and rigid, so that the water-in-oil emulsion may tend to cause syneresis.

The oil phase of the water-in-oil emulsion of the present invention preferably has a solid fat content that is generated by holding the oil phase at 0°C for 5 minutes after complete dissolution of from 15 to 40%, more preferably from 17 to 37%, and still more preferably from 20 to 35%. If the solid fat content that is generated by holding the oil phase at 0°C for 5 minutes after complete dissolution exceeds 40%, the oil phase becomes too hard and rigid, so that the water-in-oil emulsion may tend to cause syneresis. On the other hand, if it is less than 15%, the hardness may be insufficient.

The oil phase of the water-in-oil emulsion of the present invention preferably has a solid fat content that is generated by holding the oil phase at 5°C for 7 days after complete dissolution of from 25 to 55%, more preferably from 25 to 52%, and still more preferably from 25 to 50%. If the solid fat content that is generated by holding the oil phase at 5°C for 7 days after complete dissolution exceeds 55%, the oil phase becomes too hard and rigid, so that the water-in-oil emulsion may tend to cause syneresis. On the other hand, if it is less than 25%, the hardness may be insufficient.

The oil phase of the water-in-oil emulsion of the present invention preferably has a ratio of the solid fat content that is generated by holding the oil phase at 5°C for 7 days after complete dissolution to the solid fat content that is generated by holding the oil phase at 0°C for 5 minutes after complete dissolution of from 0.9 to 1.4, more preferably from 1 to 1.37, and still more preferably from 1 to 1.35. If the ratio of the solid fat content that is generated by holding the oil phase at 5°C for 7 days after complete dissolution to the solid fat content that is generated by holding the oil phase at 0°C for 5 minutes after complete dissolution exceeds 1.4, the oil phase becomes too hard and rigid, so that the water-in-oil emulsion may tend to cause syneresis. On the other hand, if it is less than 0.9, the hardness may be insufficient.

In the water-in-oil emulsion of the present invention, an oil and/or fat containing, in the constituent fatty acid composition, 20 wt.% or more of a fatty acid having 14 or less carbons can be used. When the oil and/or fat containing, in the constituent fatty acid composition, 20 wt.% or more of a fatty acid having 14 or less carbons is used in the water-in-oil emulsion of the present invention, the blending proportion of the oil and/or fat in the entire water-in-oil emulsion is preferably 70 wt.% or less, more preferably from 20 to 65 wt.%, and still more preferably from 40 to 60 wt.%. If the blending proportion of the oil and/or fat in the entire water-in-oil emulsion exceeds 70 wt.%, the blending amount of the liquid oil and/or fat for a water-in-oil emulsion is insufficient and the oil phase becomes too hard and rigid, so that the water-in-oil emulsion may tend to cause syneresis.

In the water-in-oil emulsion of the present invention, an oil and/or fat containing, in the constituent fatty acid composition, 90 wt.% or more of a saturated fatty acid having 16 or more carbons can be used. When the oil and/or fat containing, in the constituent fatty acid composition, 90 wt.% or more of a saturated fatty acid having 16 or more carbons is used in the water-in-oil emulsion of the present invention, the blending proportion of the oil and/or fat in the entire water-in-oil emulsion is preferably 8 wt.% or less, more preferably 5 wt.%, and still more preferably 3 wt.%. If the blending proportion of the oil and/or fat in the entire water-in-oil emulsion exceeds 8 wt.%, the oil phase becomes too hard and rigid, so that the water-in-oil emulsion may tend to cause syneresis.

The water-in-oil emulsion of the present invention preferably has a hardness at 5°C of from 200 to 1500 gf, more preferably from 300 to 1200 gf, and still more preferably from 300 to 900 gf. If the hardness of the water-in-oil emulsion at 5°C exceeds 1500 gf, it may be difficult to apply the water-in-oil emulsion uniformly or knead the water-in-oil emulsion into a dough. On the other hand, if the hardness of the water-in-oil emulsion at 5°C is lower than 200 gf, moldability and shape retention may be impaired.

### Examples

Hereinafter, the present invention is specifically described with reference to examples. Unless otherwise specified, the numerical values are expressed on a weight basis.

### (Method for Measuring Fatty Acid Composition)

The constituent fatty acid composition of an oil and/or fat was measured in accordance with Standard Methods for Analysis of Fats, Oils and Related Materials 2.4.2.1-2013.

### (Method for Measuring Diglyceride and Triglyceride (TG) Compositions)

The diglyceride and triglyceride (TG) compositions of an oil and/or fat were measured by high performance liquid chromatography in accordance with Standard Methods for Analysis of Fats, Oils and Related Materials 2.4.6.2-2013. The measurement was performed under the conditions of (column: ODS, eluent: acetone/acetonitrile = 80/20, liquid volume: 0.9 mL/min, column temperature: 25°C, detector: differential refractometer). Molecular species of diglycerides and triglycerides were identified and quantified using the known measurement results of refined palm oil and palm super olein as a reference.

### (Solid Fat Content)

The analyzer used was "minispec mq20" available from Bruker Corporation. The solid fat content was determined according to IUPAC 2.150A (Solid Content Determination in Fats by NMR). A method for determining the solid fat content unique to the present invention was as follows.
the solid fat content that is generated by holding an oil and/or fat at 0°C for 5 minutes after complete dissolution was determined by placing the oil and/or fat in a specified SFC tube, and then analyzing a sample obtained by holding the oil and/or fat at 60°C for 30 minutes and then at 0°C for 5 minutes.
the solid fat content that is generated by holding an oil and/or fat at 5°C for 7 days after complete dissolution was determined by placing the oil and/or fat in a specified SFC tube, and then analyzing a sample obtained by holding the oil and/or fat at 60°C for 30 minutes and then at 5°C for 7 days.

### (Liquid Oil and/or Fat 1)

20 wt.% of shea butter and 80 wt.% of acetone were mixed and stirred at 27.5°C for 30 minutes to precipitate a gummy substance. Thereafter, the product was allowed to stand, and the gummy substance that had settled was filtered to give degummed shea butter. Next, the degummed shea butter and acetone were mixed so that the ratio between them would be 18.5 wt.% of degummed shea butter to 81.5 wt.% of acetone. The temperature was gradually lowered while the mixture was weakly stirred. After reaching 2.5°C, the temperature was held at a constant temperature for about 30 minutes, and the resulting mixed liquid was filtered to give a liquid fraction (shea olein) and a solid fraction (shea stearin). The shea olein in the liquid fraction (fractionated low melting point fraction) was decolored and deodorized by a routine method to give a liquid oil and/or fat 1. The liquid oil and/or fat 1 had a solid fat content of 0.5% at 25°C.

### (Liquid Oil and/or Fat 2)

A blended oil (the main fatty acid composition was C16 = 48.6 wt.%, C18 = 15.1 wt.%, C1 8:1c = 28.7 wt.%, C18:2c = 5.0 wt.%) of palm oil, palm fractionated high melting point fraction, extremely hardened high oleic sunflower oil, and high oleic sunflower oil was subjected to random interesterification using sodium methylate, and a low melting point fraction obtained by fractionation with acetone was decolored and deodorized by a routine method to give a liquid oil and/or fat 2. The liquid oil and/or fat 2 had a solid fat content of 1.2% at 25°C.

### (Liquid Oil and/or Fat 3)

A low melting point fraction obtained by fractionation of palm mid fraction (PMF) with acetone was decolored and deodorized by a routine method to give a liquid oil and/or fat 3. The liquid oil and/or fat 3 had a solid fat content of 1.3% at 25°C.

### (Liquid Oil and/or Fat 4)

High oleic sunflower oil and stearic acid were subj ected to interesterification using a lipase having 1,3-position specificity, and a low melting point fraction obtained by fractionation with hexane was decolored and deodorized by a routine method to give a liquid oil and/or fat 4. The liquid oil and/or fat 4 had a solid fat content of 0.1% at 25°C.

### (Liquid Oil and/or Fat 5)

High oleic sunflower oil and behenic acid were subjected to interesterification using a lipase having 1,3-position specificity, and a low melting point fraction obtained by fractionation with hexane was decolored and deodorized by a routine method to give a liquid oil and/or fat 5. The liquid oil and/or fat 4 had a solid fat content of 5.7% at 25°C.

### (Liquid Oils and/or Fats 6 to 9)

In addition to the vegetable oils and/or fats described above, refined rapeseed oil (available from FUJI OIL CO., LTD.) was used as a liquid oil and/or fat 6, edible rice oil (available from FUJI OIL CO., LTD.) was used as a liquid oil and/or fat 7, refined high oleic sunflower oil (available from FUJI OIL CO., LTD.) was used as a liquid oil and/or fat 8, and palm super olein having an iodine value of 67 (available from FUJI OIL CO., LTD.) was used as a liquid oil and/or fat 9. The liquid oils and/or fats 6 to 9 all had a solid fat content of 0.5% or less at 25°C.

Using the liquid oils and/or fats 1 to 9, liquid oils and/or fats for a water-in-oil emulsion of Examples 1 to 10 and liquid oils and/or fats for a water-in-oil emulsion of Comparative Examples 1 to 5 were prepared as indicated in Tables 1 and 2.

**[Table 1]**

| | Liquid oil and/or fat composition Example 1 | Liquid oil and/or fat composition Example 2 | Liquid oil and/or fat composition Example 3 | Liquid oil and/or fat composition Example 4 | Liquid oil and/or fat composition Example 5 | Liquid oil and/or fat composition Example 6 | Liquid oil and/or fat composition Example 7 | Liquid oil and/or fat composition Example 8 | Liquid oil and/or fat composition Example 9 | Liquid oil and/or fat composition Example 10 |
|---|---|---|---|---|---|---|---|---|---|---|
| Liquid oil and/or fat 1 | 100.0 | 68.0 | 65.2 | 65.2 | 65.2 | | | 65.2 | 65.2 | 65.2 |
| Liquid oil and/or fat 2 | | | | | | 100.0 | 65.2 | | | |
| Liquid oil and/or fat 3 | | | | | | | | | 34.8 | |
| Liquid oil and/or fat 4 | | | | | | | | | | 34.8 |
| Liquid oil and/or fat 6 | | 32.0 | 34.8 | | | | 34.8 | | | |
| Liquid oil and/or fat 7 | | | | 34.8 | | | | | | |
| Liquid oil and/or fat 8 | | | | | 34.8 | | | | | |
| Liquid oil and/or fat 9 | | | | | | | | 34.8 | | |
| Total | 100.0 | 100.0 | 100.0 | 100.0 | 100.0 | 100.0 | 100.0 | 100.0 | 100.0 | 100.0 |

**[Table 2]**

| | Liquid oil and/or fat composition Comparative Example 1 | Liquid oil and/or fat composition Comparative Example 2 | Liquid oil and/or fat composition Comparative Example 3 | Liquid oil and/or fat composition Comparative Example 4 | Liquid oil and/or fat composition Comparative Example 5 |
|---|---|---|---|---|---|
| Liquid oil and/or fat 3 | | | 100.0 | | |
| Liquid oil and/or fat 4 | | | | 100.0 | |
| Liquid oil and/or fat 5 | | | | | 100.0 |
| Liquid oil and/or fat 6 | 100.0 | | | | |
| Liquid oil and/or fat 9 | | 100.0 | | | |
| Total | 100.0 | 100.0 | 100.0 | 100.0 | 100.0 |

As for the liquid oils and/or fats for a water-in-oil emulsion of Examples 1 to 10 and the liquid oils and/or fats for a water-in-oil emulsion of Comparative Examples 1 to 5 indicated in Tables 1 and 2, the fatty acid composition and the triglyceride composition are indicated in Tables 3 and 4.

Structures indicated by the abbreviations of triglyceride compositions are as follows.
- PO2 A triglyceride in which one molecule of P and two molecules of O are bonded together.
- StO2 A triglyceride in which one molecule of St and two molecules of O are bonded together.
- BO2 A triglyceride in which one molecule of B and two molecules of O are bonded together.

Here, regarding the fatty acids that constitute the triglycerides, P represents palmitic acid, St represents stearic acid, B represents behenic acid, O represents oleic acid, and L represents linoleic acid. It is not considered that to which of the 1- to 3-positions each fatty acid is bonded.

**[Table 3]**

| | | Liquid oil and/or fat composition Example 1 | Liquid oil and/or fat composition Example 2 | Liquid oil and/or fat composition Example 3 | Liquid oil and/or fat composition Example 4 | Liquid oil and/or fat composition Example 5 | Liquid oil and/or fat composition Example 6 | Liquid oil and/or fat composition Example 7 | Liquid oil and/or fat composition Example 8 |
|---|---|---|---|---|---|---|---|---|---|
| Fatty acid composition % | C16 (palmitic acid) | 6.4 | 5.6 | 5.5 | 10.5 | 6.2 | 30.0 | 20.9 | 15.3 |
| | C18 (stearic acid) | 27.2 | 19.1 | 18.4 | 18.4 | 18.8 | 7.0 | 5.2 | 18.9 |
| | C18:1c (oleic acid) | 55.6 | 58.7 | 59.0 | 51.0 | 65.4 | 49.2 | 54.8 | 53.3 |
| | C18:2c (linoleic acid) | 8.3 | 11.5 | 11.8 | 17.2 | 7.4 | 11.8 | 14.1 | 10.2 |
| | C22 (behenic acid) | 0.0 | 0.1 | 0.1 | 0.1 | 0.3 | 0.0 | 0.1 | 0.0 |
| TG composition % | Diglyceride | 14.1 | 10.0 | 9.7 | 11.8 | 9.9 | 16.8 | 11.4 | 11.8 |
| | PO2 | 5.4 | 4.0 | 3.9 | 6.8 | 7.5 | 25.2 | 16.8 | 15.3 |
| | StO2 | 34.6 | 23.9 | 23.0 | 22.9 | 25.0 | 6.7 | 4.8 | 24.0 |
| | BO2 | 0.1 | 0.1 | 0.1 | 0.1 | 0.7 | 0.0 | 0.1 | 0.1 |
| | SU2 triglyceride | 49.1 | 37.0 | 35.9 | 413 | 39.7 | 47.0 | 34.5 | 50.4 |
| | S2U triglyceride | 144 | 10.6 | 10.3 | 12.9 | 10.6 | 19.4 | 13.5 | 17.0 |
| | SSS triglyceride | 22 | 1.5 | 1.4 | 1.5 | 16 | 0.4 | 0.3 | 1.5 |
| Evaluation | Palmitic acid + stearic acid | 33.6 | 24.7 | 23.9 | 28.9 | 25.0 | 37.0 | 26.1 | 342 |
| | Oleic acid+ linoleic acid | 63.9 | 70.2 | 70.8 | 68.3 | 72.8 | 61.0 | 68.9 | 63.5 |
| | Saturated fatty acid | 34.3 | 25.6 | 24.8 | 29.6 | 25.9 | 38.2 | 27.4 | 35.1 |
| | Trans fatty acid | 0.5 | 0.6 | 0.6 | 0.5 | 0.3 | 0.4 | 0.5 | 0.4 |
| | Diglyceride | 14.1 | 10.0 | 9.7 | 11.8 | 9.9 | 16.8 | 114 | 11.8 |
| | SU2 triglyceride | 49.1 | 37.0 | 35.9 | 41.3 | 39.7 | 47.0 | 34.5 | 50.4 |
| | S2U triglyceride + SSS triglyceride | 16.6 | 12.1 | 11.7 | 14.5 | 12.3 | 19.8 | 13.8 | 18.5 |

**[Table 4]**

| | | Liquid oil and/or fat composition Example 9 | Liquid oil and/or fat composition Example 10 | Liquid oil and/or fat composition Comparative Example 1 | Liquid oil and/or fat composition Comparative Example 2 | Liquid oil and/or fat composition Comparative Example 3 | Liquid oil and/or fat composition Comparative Example 4 | Liquid oil and/or fat composition Comparative Example 5 |
|---|---|---|---|---|---|---|---|---|
| Fatty acid composition % | C16 (palmitic acid) | 18.6 | 5 4 | 3.9 | 32.1 | 41.4 | 3.5 | 2.2 |
| | C18 (stearic acid) | 19.2 | 27.9 | 1.9 | 3.3 | 4.3 | 29.3 | 4.3 |
| | C18:1c (oleic acid) | 50.1 | 57.4 | 653 | 49.0 | 39.7 | 60.9 | 57.1 |
| | C18:2c (linoleic acid) | 9.7 | 7.3 | 18.4 | 13.8 | 12.3 | 5.4 | 2.5 |
| | C22 (behenic acid) | 0.0 | 0.1 | 0.2 | 0.0 | 0.0 | 0.4 | 28.8 |
| TG composition % | Diglyceride | 13.8 | 10.2 | 1.4 | 7.5 | 13.2 | 2.8 | 3.7 |
| | PO2 | 11.8 | 5 4 | 1.0 | 33.9 | 23.9 | 5.3 | 1.9 |
| | StO2 | 23.6 | 41.8 | 1.2 | 4.0 | 2.9 | 55.2 | 2.9 |
| | BO2 | 0.1 | 0.3 | 0.2 | 0.0 | 0.0 | 0.8 | 44.0 |
| | SU2 triglyceride | 44.3 | 56.5 | 11.2 | 52.9 | 35.3 | 70.4 | 50.3 |
| | S2U triglyceride | 22.7 | 13.8 | 2.5 | 21.8 | 38.2 | 12.6 | 7.7 |
| | SSS triglyceride | 1.6 | 1.8 | 0.0 | 0.3 | 0.4 | 1.1 | 0.8 |
| Evaluation | Palmitic acid + stearic acid | 37.8 | 33.3 | 5.8 | 35.4 | 45.7 | 32.8 | 6.5 |
| | Oleic acid+ linoleic acid | 59.8 | 64.7 | 83.7 | 62.8 | 52.0 | 66.3 | 59.6 |
| | Saturated fatty acid | 38.9 | 34.0 | 7.1 | 36.7 | 47.4 | 33.4 | 35.3 |
| | Trans fatty acid | 0.4 | 0.3 | 0.8 | 0.3 | 0.1 | 0.0 | 1.9 |
| | Diglyceride | 138 | 10.2 | 1.4 | 7.5 | 13.2 | 2.8 | 3.7 |
| | SU2 triglyceride | 44.3 | 56.5 | 112 | 52.9 | 35.3 | 70.4 | 50.3 |
| | S2U triglyceride + SSS triglyceride | 24.3 | 156 | 2.5 | 22.1 | 38.6 | 13.7 | 8.5 |

### (Evaluation of Composition Analysis Values)

The composition analysis values were evaluated according to the following numerical values (A) to (D).
(A) A total content of palmitic acid and stearic acid is from 10 to 40 wt.% in the constituent fatty acid composition.
(B) A total content of oleic acid and linoleic acid is from 55 to 80 wt.% in the constituent fatty acid composition.
(C) A content of a diglyceride is 8 wt.% or more.
(D) A content of an SU2 triglyceride is from 30 to 60 wt.%.

### (Consideration of Tables 3 and 4)

- The liquid oils and/or fats for a water-in-oil emulsion of Examples 1 to 10 satisfied all of the numerical ranges (A) to (D).
- The liquid oil and/or fat for a water-in-oil emulsion of Comparative Example 1 did not satisfy any of the numerical ranges (A) to (D).
- The liquid oil and/or fat for a water-in-oil emulsion of Comparative Example 2 did not satisfy the numerical range (C).
- The liquid oil and/or fat for a water-in-oil emulsion of Comparative Example 3 did not satisfy the numerical ranges (A) and (B).
- The liquid oil and/or fat for a water-in-oil emulsion of Comparative Example 4 did not satisfy the numerical ranges (C) and (D).
- The liquid oil and/or fat for a water-in-oil emulsion of Comparative Example 5 did not satisfy the numerical ranges (A) and (C).

### (Production Example 1)

A blended oil (the main fatty acid composition was C12 = 15.6 wt.%, C16 = 33.8 wt.%, C18 = 4.0 wt.%, C18:1c = 31.0 wt.%, C18:2c = 6.7 wt.%) of palm oil, palm fractionated high melting point fraction, and palm kernel fractionated low melting point fraction was subjected to random interesterification using sodium methylate, and decolored and deodorized by a routine method to give a solid oil and/or fat of Production Example 1.

### (Production Example 2)

A blended oil (the main fatty acid composition was C12 = 17.6 wt.%, C14 = 5.9 wt.%, C16 = 20.9 wt.%, C18 = 21.8 wt.%, C18:1c = 24.9 wt.%, C18:2c = 5.0 wt.%) of palm fractionated low melting point fraction, extremely hardened palm oil, palm kernel fractionated low melting point fraction, high oleic sunflower oil, and extremely hardened high oleic sunflower oil was subjected to random interesterification using sodium methylate, and decolored and deodorized by a routine method to give a solid oil and/or fat of Production Example 2.

As vegetable oils and/or fats, in addition to the liquid oils and/or fats for a water-in-oil emulsion of Examples 1 to 10, the liquid oils and/or fats for a water-in-oil emulsion of Comparative Examples 1 to 5, and the solid oils and/or fats of Production Examples 1 and 2, refined palm kernel oil (the main fatty acid composition was C12 = 47.7 wt.%, available from FUJI OIL CO., LTD.) and extremely hardened high erucic rapeseed oil (the content of a saturated fatty acid having 16 or more carbons in the constituent fatty acid composition was 99.7 wt.%, available from FUJI OIL CO., LTD.) were used. As an animal oil and/or fat, milk fat (butter oil, available from Friesland Campina Butter) was used.

Water-in-oil emulsions (water-in-oil emulsions of Examples 1 to 17 and water-in-oil emulsions of Comparative Examples 1 to 9) were prepared according to the following Tables 5 to 7 and "Method for Preparing Water-in-oil Emulsion".

**[Table 5]**

| | Water-in-oil emulsion Example 1 | Water-in-oil emulsion Example 2 | Water-in-oil emulsion Example 3 | Water-in-oil emulsion Example 4 | Water-in-oil emulsion Example 5 | Water-in-oil emulsion Example 6 | Water-in-oil emulsion Example 7 | Water-in-oil emulsion Example 8 | Water-in-oil emulsion Example 9 |
|---|---|---|---|---|---|---|---|---|---|
| Liquid oil and/or fat composition Example 1 | 25.0 | | 23.0 | | | | | | |
| Liquid oil and/or fat composition Example 2 | | 25.0 | | | | | | | |
| Liquid oil and/or fat composition Example 3 | | | | 23.0 | | | | | |
| Liquid oil and/or fat composition Example 4 | | | | | 23.0 | | | | |
| Liquid oil and/or fat composition Example 5 | | | | | | 23.0 | | | |
| Liquid oil and/or fat composition Example 6 | | | | | | | 23.0 | | |
| Liquid oil and/or fat composition Example 7 | | | | | | | | 23.0 | |
| Liquid oil and/or fat composition Example 8 | | | | | | | | | 23.0 |
| Milk fat | 25.0 | 25.0 | 25.0 | 25.0 | 25.0 | 25.0 | 25.0 | 25.0 | 25.0 |
| Extremely hardened high erucic rapeseed oil | | | 2.0 | 2.0 | 2.0 | 2.0 | 2.0 | 2.0 | 2.0 |
| Water | 50.0 | 50.0 | 50.0 | 50.0 | 50.0 | 50.0 | 50.0 | 50.0 | 50.0 |
| Total | 100.0 | 100.0 | 100.0 | 100.0 | 100.0 | 100.0 | 100.0 | 100.0 | 100.0 |

**[Table 6]**

| | Water-in-oil emulsion Example 10 | Water-in-oil emulsion Example 11 | Water-in-oil emulsion Example 12 | Water-in-oil emulsion Example 13 | Water-in-oil emulsion Example 14 | Water-in-oil emulsion Example 15 | Water-in-oil emulsion Example 16 | Water-in-oil emulsion Example 17 |
|---|---|---|---|---|---|---|---|---|
| Liquid oil and/or fat composition Example 1 | | | | 10.4 | | 13.0 | 35.0 | |
| Liquid oil and/or fat composition Example 6 | | | 33.0 | | 10.4 | | | 35.0 |
| Liquid oil and/or fat composition Example 9 | 23.0 | | | | | | | |
| Liquid oil and/or fat composition Example 10 | | 23.0 | | | | | | |
| Milk fat | 25.0 | 25.0 | 15.0 | | | | | |
| Solid oil and/or fat Production Example 1 | | | | 52.0 | 52.0 | | | |
| Solid oil and/or fat Production Example 2 | | | | | | 52.0 | | |
| Refined palm kernel oil | | | | | | | 35.0 | 35.0 |
| Extremely hardened high erucic rapeseed oil | 2.0 | 2.0 | 2.0 | 2.6 | 2.6 | | | |
| Water | 50.0 | 50.0 | 50.0 | 35.0 | 35.0 | 35.0 | 30.0 | 30.0 |
| Total | 100.0 | 100.0 | 100.0 | 100.0 | 100.0 | 100.0 | 100.0 | 100.0 |

**[Table 7]**

| | Water-in-oil emulsion Comp arative Example 1 | Water-in-oil emulsion Comparative Example 2 | Water-in-oil emulsion Comparative Example 3 | Water-in-oil emulsion Comparative Example 4 | Water-in-oil emulsion Comparative Example 5 | Water-in-oil emulsion Comparative Example 6 | Water-in-oil emulsion Comparative Example 7 | Water-in-oil emulsion Comparative Example 8 | Water-in-oil emulsion Comparative Example 9 |
|---|---|---|---|---|---|---|---|---|---|
| Liquid oil and/or fat composition Comparative Example 1 | | 23.0 | | | | | 33.0 | 10.4 | 13.0 |
| Liquid oil and/or fat composition Comparative Example 2 | | | 23.0 | | | | | | |
| Liquid oil and/or fat composition Comparative Example 3 | | | | 23.0 | | | | | |
| Liquid oil and/or fat composition Comparative Example 4 | | | | | 23.0 | | | | |
| Liquid oil and/or fat composition Comparative Example 5 | | | | | | 23.0 | | | |
| Milk fat | 50.0 | 25.0 | 25.0 | 25.0 | 25.0 | 25.0 | 15.0 | | |
| Solid oil and/or fat Production Example 1 | | | | | | | | 52.0 | |
| Solid oil and/or fat Production Example 2 | | | | | | | | | 52.0 |
| Extremely hardened high erucic rapeseed oil | | 2.0 | 2.0 | 2.0 | 2.0 | 2.0 | 2.0 | 2.6 | |
| Water | 50.0 | 50.0 | 50.0 | 50.0 | 50.0 | 50.0 | 50.0 | 35.0 | 35.0 |
| Total | 100.0 | 100.0 | 100.0 | 100.0 | 100.0 | 100.0 | 100.0 | 100.0 | 100.0 |

### (Method for Preparing Water-in-oil Emulsion)

1. An oil and/or fat mixture was melted at 60 to 70°C to prepare an oil phase.
2. An aqueous phase was added to and mixed in the oil phase while being stirred.
3. The resulting mixed liquid was rapidly cooled and solidified with ice water while being stirred to give a water-in-oil emulsion.

As for each of the water-in-oil emulsions of Examples 1 to 17 and the water-in-oil emulsions of Comparative Examples 1 to 9 indicated in Tables 5 to 7, the oil phase portion was separately prepared. The solid fat content that is generated by holding the oil phase at 0°C for 5 minutes after complete dissolution, the solid fat content that is generated by holding the oil phase at 5°C for 7 days after complete dissolution, and the ratio between them were determined and evaluated according to the Evaluation of Physical Property Analysis Values. The results of measurement are indicated in Tables 8 to 10.

### (Evaluation of Physical Property Analysis Values)

The oil phase portions of the water-in-oil emulsions were evaluated according to the following numerical values (a) to (c).
(a) After complete dissolution, a solid fat content that is generated by holding the oil phase at 0°C for 5 minutes is from 15 to 40%.
(b) After complete dissolution, a solid fat content that is generated by holding the oil phase at 5°C for 7 days is from 25 to 55%.
(c) A (b)/(a) ratio is from 0.9 to 1.4.

The water-in-oil emulsions of Examples 1 to 17 and the water-in-oil emulsions of Comparative Examples 1 to 9 indicated in Tables 5 to 7 were subjected to the syneresis evaluation and the measurement of hardness according to the Syneresis Evaluation Method and the Hardness Measurement Method, and also subjected to the evaluation according to the Syneresis Evaluation Criteria and the Hardness Evaluation Criteria. The results of measurement are indicated in Tables 8 to 10.

### (Syneresis Evaluation Method)

Each of the obtained water-in-oil emulsions was allowed to stand in a temperature control chamber at 5°C for 3 days, and then cut with a metal spatula. The occurrence of syneresis on the cut surface of the water-in-oil emulsion and the occurrence of syneresis when the water-in-oil emulsion was crushed were visually checked.

### (Hardness Measurement Method)

1. A measurement sample was prepared by molding the water-in-oil emulsion so that the sample would have a size of 5 cm long × 5 cm wide × 5 cm high.
2. The sample was transferred to a temperature control chamber at 5°C and left for 24 hours to 48 hours.
3. The hardness of the sample was measured with a rheometer (RTC-3002D available from Rheotech Co., Ltd.) with a plunger having a diameter of 3 mm at a penetration speed of 5 cm/min.

### (Syneresis Evaluation Criteria)

The evaluation was performed on the basis of the following evaluation criteria by five panelists who are ordinarily engaged in the development of water-in-oil emulsions and conduct trial production of water-in-oil emulsions. A water-in-oil emulsion having a score of 8 or more was determined to be acceptable after a discussion by the five panelists.
- Score 10: No water droplets were observed at all on the cut surface, and even when the water-in-oil emulsion was crushed, no syneresis occurred and the structure was uniform.
- Score 8: No water droplets were observed on the cut surface, and even when the water-in-oil emulsion was crushed, no syneresis occurred, but portions where the structure was uneven and the water-in-oil emulsion was about to cause syneresis were partially observed.
- Score 6: No water droplets were observed on the cut surface, but syneresis occurred when the water-in-oil emulsion was crushed.
- Score 4: A small amount of water droplets were observed on the cut surface, and syneresis occurred when the water-in-oil emulsion was crushed.
- Score 2: A large amount of syneresis was observed on the cut surface to the extent of dripping, and a still larger amount of syneresis occurred when the water-in-oil emulsion was crushed.

### (Hardness Evaluation Criteria)

Regarding the obtained hardness, a hardness of from 300 gf to 1200 gf was defined as a good range of hardness.

**[Table 8]**

| | | Water-in-oil emulsion Example 1 | Water-in-oil emulsion Example 2 | Water-in-oil emulsion Example 3 | Water-in-oil emulsion Example 4 | Water-in-oil emulsion Example 5 | Water-in-oil emulsion Example 6 | Water-in-oil emulsion Example 7 | Water-in-oil emulsion Example 8 | Water-in-oil emulsion Example 9 |
|---|---|---|---|---|---|---|---|---|---|---|
| Oil phase portion | (a) Solid fat content that is generated by holding water-in-oil emulsion at 0°C for 5 minutes after complete dissolution | 27.3 | 21.7 | 32.1 | 25.5 | 29.0 | 27.8 | 33.5 | 29.4 | 32.4 |
| | (b) Solid fat content that is generated by holding water-in-oil emulsion at 5°C for 7 days after complete dissolution | 35.8 | 30.2 | 39.0 | 33.0 | 35.3 | 34.0 | 43.8 | 36.8 | 37.9 |
| | (c) (b)/(a) ratio | 1.31 | 1.39 | 1.21 | 1.29 | 1.22 | 1.22 | 1.31 | 1.25 | 1.17 |
| Water-in-oil emulsion | Hardness (gf) | 530 | 400 | 730 | 560 | 580 | 530 | 840 | 660 | 780 |
| | Syneresis evaluation | 10 | 10 | 10 | 10 | 10 | 10 | 8 | 8 | 8 |

**[Table 9]**

| | | Water-in-oil emulsion Example 10 | Water-in-oil emulsion Example 11 | Water-in-oil emulsion Example 12 | Water-in-oil emulsion Example 13 | Water-in-oil emulsion Example 14 | Water-in-oil emulsion Example 15 | Water-in-oil emulsion Example 16 | Water-in-oil emulsion Example 17 |
|---|---|---|---|---|---|---|---|---|---|
| Oil phase portion | (a) Solid fat content that is generated by holding water-in-oil emulsion at 0°C for 5 minutes after complete dissolution | 36.4 | 34.5 | 29.5 | 35.0 | 36.9 | 38.1 | 39.2 | 37.0 |
| | (b) Solid fat content that is generated by holding water-in-oil emulsion at 5°C for 7 days after complete dissolution | 43.3 | 43.0 | 41.4 | 47.7 | 51.7 | 53.2 | 51.2 | 47.5 |
| | (c) (b)/(a) ratio | 1.19 | 1.25 | 1.40 | 1.36 | 1.40 | 1.39 | 1.31 | 1.28 |
| Water-in-oil emulsion | Hardness (gf) | 1020 | 1090 | 340 | 840 | 900 | 880 | 510 | 530 |
| | Syneresis evaluation | 8 | 8 | 10 | 8 | 8 | 8 | 8 | 8 |

**[Table 10]**

| | | Water-in-oil emulsion Comparative Example 1 | Water-in-oil emulsion Comparative Example 2 | Water-in-oil emulsion Comparative Example 3 | Water-in-oil emulsion Comparative Example 4 | Water-in-oil emulsion Comparative Example 5 | Water-in-oil emulsion Comparative Example 6 | Water-in-oil emulsion Comparative Example 7 | Water-in-oil emulsion Comparative Example 8 | Water-in-oil emulsion Comparative Example 9 |
|---|---|---|---|---|---|---|---|---|---|---|
| Oil phase portion | (a) Solid fat content that is generated by holding water-in-oil emulsion at 0°C for 5 minutes after complete dissolution | 43.4 | 18.8 | 28.1 | 38.7 | 31.9 | 45.6 | 9.6 | 43.3 | 32.4 |
| | (b) Solid fat content that is generated by holding water- | 55.3 | 27.4 | 40.5 | 54.4 | 546 | 57.4 | 15.1 | 45.6 | 46.9 |
| | in-oil emulsion at 5°C for 7 days after complete dissolution | | | | | | | | | |
| | (c) (b)/(a) ratio | 1.27 | 1.46 | 144 | 141 | 1.71 | 126 | 1.57 | 105 | 1.45 |
| Water-in-oil emulsion | Hardness (gf) | 1050 | 270 | 760 | 1630 | 1440 | 1770 | 70 | 1600 | 1490 |
| | Syneresis evaluation | 2 | 4 | 2 | 2 | 6 | 2 | 4 | 4 | 6 |

### (Consideration of Evaluation of Physical Property Analysis Values of Oil Phase Portions in Tables 8 to 10)

- The water-in-oil emulsions of Examples 1 to 17 satisfied all of the numerical ranges (a) to (c).
- The water-in-oil emulsions of Comparative Examples 1 and 6 did not satisfy the numerical ranges (a) and (b).
- The water-in-oil emulsions of Comparative Examples 2 to 5 and 9 did not satisfy the numerical range (c).
- The water-in-oil emulsion of Comparative Example 7 did not satisfy any of the numerical ranges (a) to (c).
- The water-in-oil emulsion of Comparative Example 8 did not satisfy the numerical range (a).

### (Consideration of Hardness (gf) Evaluation and Syneresis Evaluation of Water-in-oil Emulsions in Tables 8 to 10)

- The water-in-oil emulsions of Examples 1 to 17 were suitable water-in-oil emulsions since they had a hardness in the good range and were also evaluated as good in syneresis evaluation.
- The water-in-oil emulsions of Comparative Examples 1 and 3 were not suitable water-in-oil emulsions since they were evaluated as poor in syneresis evaluation although they had a hardness in the good range.
- The water-in-oil emulsions of Comparative Examples 2 and 4 to 9 were not suitable water-in-oil emulsions since they did not have a hardness in the good range and were also evaluated as poor in syneresis evaluation.

As for the water-in-oil emulsions of Example 3, Comparative Example 1, and Comparative Example 2, a test of producing a water-in-oil emulsion by trial production was performed according to the Trial Method for Producing Water-in-oil Emulsion on Pilot Scale described below using a Kombinator, which is a pilot-scale margarine production device. As a result, it was confirmed that the same tendency as in the above-mentioned laboratory test was obtained.

### (Trial Method for Producing Water-in-oil Emulsion on Pilot Scale)

1. An oil and/or fat mixture was melted at 60 to 70°C to prepare an oil phase.
2. Raw materials classified as aqueous phase raw materials were added to and dissolved in water.
3. The aqueous phase was added to and mixed in the oil phase while being stirred. The mixed liquid obtained here is referred to as a preparation liquid.
4. The preparation liquid was processed with a Kombinator to give a water-in-oil emulsion.

### Industrial Applicability

According to the present invention, use of a liquid oil and/or fat for a water-in-oil emulsion having a specific constituent fatty acid composition and having a diglyceride content and a triglyceride content each within a certain range can provide a water-in-oil emulsion having a syneresis inhibiting effect and a required hardness even though it has a high proportion of an aqueous phase and is substantially free of water-soluble dietary fiber and an emulsifier other than lecithin.

## Claims

1. A liquid oil and/or fat for a water-in-oil emulsion, satisfying all of (A) to (D):
(A) a total content of palmitic acid and stearic acid is from 10 to 45 wt.% in a constituent fatty acid composition;
(B) a total content of oleic acid and linoleic acid is from 55 to 80 wt.% in a constituent fatty acid composition;
(C) a content of a diglyceride is 8 wt.% or more; and
(D) a content of an SU2 triglyceride is from 30 to 70 wt.%,
wherein S represents a saturated fatty acid having from 16 to 22 carbons, U represents an unsaturated fatty acid having 18 carbons, and the SU2 triglyceride represents a triglyceride in which one molecule of S and two molecules of U are bonded together.

2. A water-in-oil emulsion substantially free of water-soluble dietary fiber and an emulsifier other than lecithin, the water-in-oil emulsion comprising at least the liquid oil and/or fat for a water-in-oil emulsion according to claim 1 and having a proportion of an aqueous phase of from 25 to 70 wt.%.

3. A water-in-oil emulsion substantially free of water-soluble dietary fiber and an emulsifier other than lecithin, the water-in-oil emulsion comprising at least the liquid oil and/or fat for a water-in-oil emulsion according to claim 1 and having a proportion of an aqueous phase of from 30 to 60 wt.%.

4. A water-in-oil emulsion substantially free of water-soluble dietary fiber and an emulsifier other than lecithin, the water-in-oil emulsion comprising at least the liquid oil and/or fat for a water-in-oil emulsion according to claim 1 and having a proportion of an aqueous phase of from 35 to 55 wt.%.

5. The water-in-oil emulsion according to claim 2, wherein the water-in-oil emulsion comprises 5 to 50 wt.% of the liquid oil and/or fat for a water-in-oil emulsion, and an oil phase satisfies all of (a) to (c):
(a) after complete dissolution, a solid fat content that is generated by holding the oil phase at 0°C for 5 minutes is from 15 to 40%;
(b) after complete dissolution, a solid fat content that is generated by holding the oil phase at 5°C for 7 days is from 25 to 55%; and
(c) a (b)/(a) ratio is from 0.9 to 1.4.

6. The water-in-oil emulsion according to claim 3, wherein the water-in-oil emulsion comprises 5 to 50 wt.% of the liquid oil and/or fat for a water-in-oil emulsion, and an oil phase satisfies all of (a) to (c):
(a) after complete dissolution, a solid fat content that is generated by holding the oil phase at 0°C for 5 minutes is from 15 to 40%;
(b) after complete dissolution, a solid fat content that is generated by holding the oil phase at 5°C for 7 days is from 25 to 55%; and
(c) a (b)/(a) ratio is from 0.9 to 1.4.

7. The water-in-oil emulsion according to claim 4, wherein the water-in-oil emulsion comprises 5 to 50 wt.% of the liquid oil and/or fat for a water-in-oil emulsion, and an oil phase satisfies all of (a) to (c):
(a) after complete dissolution, a solid fat content that is generated by holding the oil phase at 0°C for 5 minutes is from 15 to 40%;
(b) after complete dissolution, a solid fat content that is generated by holding the oil phase at 5°C for 7 days is from 25 to 55%; and
(c) a (b)/(a) ratio is from 0.9 to 1.4.

8. The water-in-oil emulsion according to claim 5, comprising 70 wt.% or less of an oil and/or fat containing, in a constituent fatty acid composition, 20 wt.% or more of a fatty acid having 14 or less carbons.

9. The water-in-oil emulsion according to claim 6, comprising 65 wt.% or less of an oil and/or fat containing, in a constituent fatty acid composition, 20 wt.% or more of a fatty acid having 14 or less carbons.

10. The water-in-oil emulsion according to claim 7, comprising 60 wt.% or less of an oil and/or fat containing, in a constituent fatty acid composition, 20 wt.% or more of a fatty acid having 14 or less carbons.

11. The water-in-oil emulsion according to claim 5, comprising 8 wt.% or less of an oil and/or fat containing, in a constituent fatty acid composition, 90 wt.% or more of a saturated fatty acid having 16 or more carbons.

12. The water-in-oil emulsion according to claim 6, comprising 8 wt.% or less of an oil and/or fat containing, in a constituent fatty acid composition, 90 wt.% or more of a saturated fatty acid having 16 or more carbons.

13. The water-in-oil emulsion according to claim 7, comprising 8 wt.% or less of an oil and/or fat containing, in a constituent fatty acid composition, 90 wt.% or more of a saturated fatty acid having 16 or more carbons.

14. The water-in-oil emulsion according to claim 8, comprising 8 wt.% or less of an oil and/or fat containing, in a constituent fatty acid composition, 90 wt.% or more of a saturated fatty acid having 16 or more carbons.

15. The water-in-oil emulsion according to claim 9, comprising 8 wt.% or less of an oil and/or fat containing, in a constituent fatty acid composition, 90 wt.% or more of a saturated fatty acid having 16 or more carbons.

16. The water-in-oil emulsion according to claim 10, comprising 8 wt.% or less of an oil and/or fat containing, in a constituent fatty acid composition, 90 wt.% or more of a saturated fatty acid having 16 or more carbons.

17. The liquid oil and/or fat for a water-in-oil emulsion according to claim 1, which is shea olein.

18. The liquid oil and/or fat for a water-in-oil emulsion according to claim 1, which is a low melting point fraction obtained by fractionation of an interesterified oil that is obtained by random interesterification.

19. A method for inhibiting syneresis of a water-in-oil emulsion by using a liquid oil and/or fat satisfying all of (A) to (D):
(A) a total content of palmitic acid and stearic acid is from 10 to 45 wt.% in a constituent fatty acid composition;
(B) a total content of oleic acid and linoleic acid is from 55 to 80 wt.% in a constituent fatty acid composition;
(C) a content of a diglyceride is 8 wt.% or more; and
(D) a content of an SU2 triglyceride is from 30 to 70 wt.%,
wherein S represents a saturated fatty acid having from 16 to 22 carbons, U represents an unsaturated fatty acid having 18 carbons, and the SU2 triglyceride represents a triglyceride in which one molecule of S and two molecules of U are bonded together.

20. The method according to claim 19, wherein the water-in-oil emulsion has a proportion of an aqueous phase of from 25 to 70 wt.%.

21. The method according to claim 19, wherein the water-in-oil emulsion has a proportion of an aqueous phase of from 30 to 60 wt.%.

22. The method according to claim 19, wherein the water-in-oil emulsion has a proportion of an aqueous phase of from 35 to 55 wt.%.
